# EUROPEAN PATENT APPLICATION

(11) **EP 4 300 250 A1**
(43) Date of publication of application: **03.01.2024**
(21) Application number: 22181878.4
(22) Date of filing: 29.06.2022
(51) Int. Cl.: G05D 7/01, G05D 16/06, G05D 16/20

(54) **GAS REGULATOR**

(71) Applicant: Gasokay ApS, 3450 Allerød (DK)
(72) Inventor: FRAHM, Søren Xerxes, 8700 Horsens (DK); JENSEN, Lasse, 8700 Horsens (DK); LUNDQUIST, Tom, 2970 Hørsholm (DK)
(74) Representative: Chas. Hude A/S

(57) **Abstract**

There is provided an actuator system for adjusting gas flow through a gas regulator, said actuator system comprising; at least one sensor for sensing a property, such as gas pressure or gas flow, and based on said property generate a sensor signal; an actuating means with a moving part adapted to be arranged in connection with the gas regulator; and a control unit adapted to receive said sensor signal from the sensor, and based on said sensor signal send an instruction signal to the actuating means for changing a position of said moving part. There is also provided gas regulator system and a method for dynamically controlling a flow of gas in a gas regulator.

## Description

### Field of the invention

The present disclosure relates to the field of gas regulation and control, more specifically to an actuator system for adjusting gas flow through a gas regulator.

### Background of the invention

Gas, especially liquid/liquefied petroleum gas (LPG), is used for numerous applications including heating, cooling, and cooking in places, most often where a steady supply of electricity cannot be ensured. This may be for outdoors grilling, on boats out at sea, at domestic applications or in camper-caravans, where the gas is often used for several appliances such as a heater an absorption fridge or a gas grill.

A LPG-container (also known as a LPG cylinder bottle) stores LP-gas under high pressure, wherein 80 % is of the LP-gas is stored as a liquid phase and 20 % as gas phase when initial filled. The LPG gas vapor is held in the top of the LPG bottle and the liquid LPG at the bottom due to gravity. The LPG stays liquid because it is under pressure in the gas container.

Since the boiling point of LPG is below room temperature, LPG will evaporate quickly at normal temperatures and pressures and is therefore supplied in pressurized gas containers. They are typically filled at maximum 80 % of their capacity to allow for thermal expansion of the contained liquid. The pressure at which LPG becomes liquid is called its vapor pressure. To boil and start vaporization, the liquid LPG draws heat from the wetted walls of the LPG cylinder bottle which, in turn, works by getting heat from the ambient air. Wall surface touched by gas phase cannot transfer heat.

An LPG container usually has a pressure between 0,3 and 16 bar. The given gas cylinder pressure is related to the gas type or mix and the ambient temperature.

When gas is consumed from the gas container the maximum flow it can provide is typical between 0,7 and 2,0 kg/h depending on the gas type, ambient temperature, and time.

To reduce the high pressure inside the gas container to a usable level, the gas is often passed through a gas regulator connected to the gas container to decrease the pressure. Hereby the regulator can deliver gas at a desired supply pressure required by a receiving device such as gas appliances. Thus, the regulator ensures that a pre-defined gas pressure is delivered when the gas is discharged from the regulator and onto the gas appliance.

This may happen in one step or in multiple steps, where 2 - 3 steps are often required. When a regulator is used with a LPG container, the regulation is often done in 1 step.

Today common regulators usually regulate the pressure from the gas container to a fixed, pre-defined outlet pressure typically around 30 mbar. But depending on the receiving device also around 37 mbar and approximately 50 mbar are common pressures.

These are called low pressure regulators and they are often used with domestic gas appliances and for many professional appliances for either cooking and/or heating. Over 1000 know application of LPG exists in the field today.

The pre-defined outlet pressure is often set when the regulator is manufactured, and these fixed outlet pressures regulators are widely used, as they provide the fixed pressure needed for a given receiving device.

Adjustable regulators are also known in the technical field. Here the user of the regulator can adjust the gas pressure on the regulator to overcome a pressure drop in the pipeline and then fix the outlet pressure by a seal to ensure sufficient gas pressure reach the receiving device in cases where long pipes with many valves and bends establish a drop in pressure. This option of user adjusted regulators is not allowed in many countries as it often means that an incorrect inlet pressure is used, which leads to an incomplete combustion at the receiving device. This presents a dangerous risk of excessive carbon monoxide gas and unburned gas being released to the surroundings.

The desired principle of a gas regulator is to balance the regulators internal force (often from a spring x arm on a diaphragm) against the inlet gas pressure from the gas cylinder. The outlet pressure represents the difference in the two forces.

However, as the inlet pressure drops when the LPG container runs empty then the outlet pressure also drops - as the spring force is pre-set at manufacture (in fixed outlet pressure regulators).

The regulator standards define a narrow band of outlet pressure tolerance allowed for fixed outlet pressure regulators. The allowed band variates with the gas type and pressure set point.

An example is the EN16129 standard:

| **Pressure characteristics of the regulator based on nominal pressures given in EN 437 Gas** | **Regulator supply pressure** | | **Regulator regulated pressure mbar** | | **Maximum downstream installation pressure loss** | | | **Appliance supply pressurea mbar** | | **Appli-ance cate-goriesa** |
|---|---|---|---|---|---|---|---|---|---|---|
| bar Butane | *p*_{d} 0,3 to | *p*Mg 29 | pMp 22 | *p*0 35 | 40 | 2 | mbar 29(28-30) | pn 20 | pmin 35 | *p*max 3B and 3+ |
| Butane | 7,5 0,3 to | 50 | 47,5 | 57,5 | 62,5 | 5 | 50 | 42,5 | 57,5 | 3+ |
| Butane | 7,5 0,3 to 7,5 | 112 | 65 | 140 | 145 | 5 | 112 | 60 | 140 | 3+ |
| LPG | 0,3 to 16 | 29 | 27 | 35 | 40 | 2 | 29 (28-30) | 25 | 35 | 3B/P |
| LPG | 0,3 to 16 | 50 | 47,5 | 57,5 | 62,5 | 5 | 50 | 42,5 | 57,5 | 3B/P |
| Propane | 1 to 16 | 30 | 27 | 35 | 40 | 2 | 30 | 25 | 35 | 3P |
| Propane | 1 to 16 | 37 | 27 | 45 | 50 | 2 | 37 | 25 | 45 | 3P and 3+ |
| Propane | 1 to 16 | 37 | 30 | 45 | 50 | 5 | 37 | 25 | 45 | 3P and 3+ |
| Propane | 1 to 16 | 50 | 47,5 | 57,5 | 62,5 | 5 | 50 | 42,5 | 57,5 | 3P |
| Propane | 1 to 16 | 67 | 55 | 80 | 85 | 5 | 67 | 50 | 80 | 3+ |
| Propane | 1 to 16 | 148 | 105 | 180 | 185 | 5 | 148 | 100 | 180 | 3+ |

As an example, we see the nominal fixed pressure for LPG is 29 mbar with an allowed tolerance between 27 and 35 mbar and a allowed lock up pressure of max 40 mbar (the max allowed pressure built up in the hose when the gas appliance is shut off).

The allowed pressure drop between regulator and appliance is 2 mbar.

In some applications the allowed pressure drop is 5 mbar- i.e. Caravan and boat installations with long copper/steel piping's 5-10 meter for the inbuilt stoves, heaters, and fridges.

If the consumption exceeds 30 minutes of duration a maximum capacity of 0,7 kg/h can be withdrawn from one 10 kg/h gas container. The limitation is defined by the maximum energy transfer through the wetted surface of the gas container. The time depends on actual consumption, ambient temperature, and the actual filling rate of the gas container.

Taking a gas grill as an example. The gas is under maximum 16 bar pressure in the gas container, some in gas phase and some as liquified gas. The gas container is in fluid communication with the gas grill via the regulator and a tube for transporting the gas. As the pressure is released when the regulator is opened and consumption starts, new liquid evaporates quickly and turns into gas phase. More specifically the equilibrium between gas and liquid phase in the container is disturbed and new liquid is thus evaporated to reestablish the equilibrium.

It is however difficult to consume the remaining liquified gas when the gas container is running low, since the pressure drop will close the gas regulator. And it is quite annoying to suddenly be without a steady supply of gas and heat in your gas grill when you are in the mist of preparing a meal.

Therefor gas containers are often exchanged at the first sign of an unsteady flow.

An alternative is using two or more gas container and a manual or automatic changeover valve. Often cheaper in price, the manual changeover valve leaves it up to the user to switch the valve from directing gas from the empty cylinder to directing gas from the standby full gas container. This means the valve will not automatically start using the full stand by gas cylinder, so the user may get an unsteady flow of gas.

When the gas container is viewed as "empty", since the pressure in the gas container is under the threshold, i.e. the value of 0,7 bar, there is actually still up to 1 kg of liquified gas left in the gas cylinder.

The amount of residual gas left in the container when the changeover valve views the container as empty depends also on the ambient environment. But typically the container still has up to 10 % liquified gas left inside.

It is due to the fact that the residual amount left in the gas container is at low pressure and with a much reduced wetted surface allowing heat to enter the liquid gas, that the new required vaporization can no longer keep up with the gas consumption (which of course is dependent on temp, bottle type and usage), and the cylinder is thus declared "empty" and the changeover valve switches to a new gas container.

Hereby a great deal of gas is not consumed and thereby waisted each time a single gas container is exchanged. This at the cost of the consumer who pays for a full gas container each time.

Furthermore, when the gas container runs low the inlet pressure to the regulator drops which results in a falling gas outlet pressure of the regulator to the receiving device, which cannot function properly.

On this background it is an object of the invention to provide an improved control of the gas flow through the gas regulator.

### Summary of the invention

According to a first aspect of the invention, the objects laid out in the background section may be achieved by an actuator system for adjusting gas flow through a gas regulator, said actuator system comprising; at least one sensor for sensing a property, such as gas pressure or gas flow, and based on said property generate a sensor signal; an actuating means with a moving part adapted to be arranged in connection with the gas regulator, and a control unit adapted to receive said sensor signal from the sensor, and based on said sensor signal send an instruction signal to the actuating means for changing a position of said moving part.

Hereby the invention provides a better controlled gas pressure delivered to the receiving device(s), i.e. the gas appliance(s). Especially the possible regulation of the gas regulator may remedy the falling gas outlet pressure of the regulator that occurs when the LPG container runs low and the inlet pressure to the regulator therefor drops.

In an embodiment of the invention the moving part is adapted to be arranged inside the gas regulator.

In yet another embodiment the actuating means and/or the control unit and/or the sensor is/are adapted for wireless communication. Preferably with at least each other.

The invention further alleviates any problems with pressure drops occurring in the pipe between the regulator and the receiving device as well as pressure drops happening due to change of altitude (approximately 1 mbar per 1000 meter).

In the fixed gas outlet pressure regulators the spring force is kept constant inside the regulator. As the inlet pressure in bar drops with the falling gas level in the container especially below 10 % volume remaining inside the gas container also the outlet pressure drops and the pressure drop of 2 mbar contribute to a (too) low inlet pressure reaching the gas appliance.

In an embodiment the actuating means via the moving part is engaged with a valve member of the actuator in order to move said valve member between a first position. Said valve member engages with a valve seat so as to close a gas flow through the regulator, and a second position. Said valve member is detached from the valve seat, so as to allow gas to flow through the regulator, based on the instruction signal.

According to an embodiment the control unit comprises a programmable computing part for calculating a setting of the actuating means from the sensor signal and/or transmitting this to said actuating means as the instruction signal.

The invention makes it possible to add a smart controlled actuator that allows to adjust dynamically the spring force up and down - optional, if needed keeping it within the given limits of the standard i.e. 27 - 35 mbar - but enabling the regulator to perform within a more narrow band of pressure and to allow adjusting the spring force to compensate for the falling inlet pressure, air pressure when the gas cylinder liquid level is getting low or to help overcome the real pressure drop in the pipeline of up to 2 - 5 mbar.

The actuator system may in an embodiment comprise at least two sensors. The sensor may be a pressure sensor and/or a flow sensor.

In an embodiment of the present invention the sensor is a weighing scale. The scale may be in connection with a gas container so as to detect a weight of the content present in said container. The content may be liquified gas and vaporized gas.

The invention also introduces two or more pressure sensors placed in the pipeline between regulator and gas appliance. One sensor is placed just at the regulator outlet measuring the actual outlet pressure, a second pressures sensor is placed at the imminent inlet of the gas appliance served with the gas. If multiple appliances are serviced by one regulator each appliance has an independent inlet pressure sensor built in.

By adding the two pressure sensors it becomes possible to shut down the gas flow by adjusting the spring force up until the regulator lever arm shut down inside the seat at the inlet nozzle. It also gives by use of the smart control a possibility to warn the end user or gas company about possible mal functions happening.

In an embodiment a shut if function may be applied to the regulators on/off lever enabling a 100 % shut off if the regulator lever arm is part of the malfunction.

In an embodiment the system further comprises a second regulator arranged in serial connection with the first, main regulator. Hereby it is possibly to perform a 100 % shut off by this second regulator in case the mechanics of the first regulator, e.g. the lever arm and/or valve member, is part of a malfunction.

This new shut down function is used to shut down and /or give alarms to end user and optional gas supplier in a number of scenarios:
- Hose pipe failure by fire, unintended disconnection of the hose etc. = major gas leak. Replaces the mechanical EFV (excess flow valve) function used on traditional fixed outlet pressure regulators.
- Over pressure shut off (OPSO) - a scenario where the regulator starts to malfunction, and outlet pressure exceeds a given set point for 30 mbar installation i.e. 45 mbar. Alternative to an PRV function
- Under pressure shut off (UPSO) a scenario where the regulator starts to malfunction, and outlet pressure falls below a given set point. For 30 mbar installations i.e. 20 mbar.

According to a second aspect of the invention, a gas regulator system comprises; an actuator system according to the first aspect, and a gas regulator having; an first housing part, a second housing part, and a diaphragm separating said parts, said second housing part having a gas inlet for receiving gas from a gas container, a gas outlet for directing gas from the regulator to a receiving device, and a valve seat; an adjusting element arranged in the first housing part and connected to said diaphragm via a dynamic element, preferably a spring; a valve member arranged in the second housing part and connected to said diaphragm via a lever, the valve member being adapted to move reciprocally between a first position, wherein said valve member engages with the valve seat so as to close a flow from said gas inlet, and a second position, wherein said valve member is detached from the valve seat, so as to allow gas to flow from the gas inlet into the second housing part and out through the gas outlet.

An advantage of the invention is providing a stable fixed pressure from the regulator to the receiving device matching the optimal inlet pressure of said receiving device i.e. 30 mbar. The gas regulators outlet pressure and the inlet pressure of the receiving device may then be measured in real time by both sensors and the control unit may accordingly dynamically adjust the regulator depending on these measurements.

In an embodiment the moving part is adapted to be arranged inside the gas regulator. Preferably inside the second hollow part of the regulator.

The much-improved dynamic adjustment regulation of the gas outlet pressure shifts focus from optimizing the regulators fixed outlet pressure to optimizing the fixed gas inlet pressure to of the gas appliance (the real need of consumers).

In an embodiment the control unit may be a Pc, or a Smart phone, or an app, or a ZigBee.

In an embodiment the sensor, preferably a pressure sensor, is arranged in connection with the second housing part, said sensor being suitable for detecting a pressure inside the second housing part.

In another embodiment the sensor is a pressure sensor and/or a flow sensor, said sensor being arranged in connection with the receiving device for detecting gas pressure and/or gas flow from the regulator to the receiving device.

Yet in another embodiment the sensor is a pressure sensor and/or a flow sensor, said sensor being arranged in connection with the gas outlet of the regulator for detecting gas pressure and/or gas flow from the regulator to the receiving device.

In an embodiment the sensor is a pressure sensor and/or a flow sensor, said sensor being arranged in connection to the gas inlet of the regulator for detecting gas pressure and/or gas flow from the gas container to the regulator.

Yet in a further embodiment the sensor is a weighing scale arranged in connection with the gas container so as to detect a weight, preferably a weight of liquified gas present in the container.

According to a third aspect of the invention, a method for dynamically controlling a flow of gas in a gas regulator is provided. The method comprising the steps of; providing an actuator system according to the first aspect; sensing a property, such as gas pressure or gas flow or weight, with the sensor; generate a sensor signal based on said property; transmitting said sensor signal from the sensor to the control unit; creating an instruction signal based on the sensor signal; transmitting the instruction signal from the control unit to the actuating means, so as to change the flow of gas through said regulator based on the sensed property.

The system according to the invention dynamically adjusts the spring force of the regulator, based on real time gas pressure information collected by the two sensors. Hereby the given inlet pressure to the gas appliance is optimized to serve best possible the design pressure of said appliance. i.e. 30 bar.

It is to be understood that many different optimal gas pressures are available, and the invention is not limited to a specific pressure point.. Through out this disclosure the standard of 30 mbar is used as an example, as this is a general pressure point for common gas appliances.

The desired gas pressure aimed at i.e. 30 mbar may be predefined in the control unit settings. This set pressure point value may in one embodiment be amended by the private end user. In another embodiment this set pressure point value may not be changed by the private end user, but may instead be amended by a professional installer, e.g. by a password, if such access has been given.

In an embodiment the steps of the method are performed dynamically so as to maintain the pressure of the gas flow out of the regulator within a pre-determined interval, preferably between approximately 20 - 40 mbar, more preferred between approximately 25 - 35 mbar.

These intervals are preferred in situations where a fixed pressure 30 mbar installation is performed. Similar variations as per EN16129 or other standard interval definitions may be used.

When invention is used in combination with a sensor, such as a gas weight and/or flow sensor, minor gas consumption at odd hours where no consumption is expected, can indicate a small leak. Here the control unit may shut down the gas flow through the regulator and give alarm notification of the possible mal function.

In an embodiment the dynamic element is a spring. This spring may be any spring selected from, but not limited to, the following group; coil spring, compression spring, extension spring, torsion spring, belleville spring, drawbar spring, volute spring, garter spring, flat spring, or a leaf spring.

It will be understood that the dynamic element may be any element that is able to pull and push, preferably by storing energy. In principle a foam block could also be a dynamic element.

The control unit may also comprise a communications module for, preferably wireless communication, with a remote server. The control unit may further comprise a power management system for providing power to the one or more processors and/or to the communications module.

In an embodiment the system comprises a power source connected to power the control unit and/or the actuating means and/or the sensor(s). The power source may be a DC power supply such as a battery or rechargeable battery. The DC power supply and the rechargeable battery may further comprise a renewable energy charging system such as a solar charging system. Alternatively, the system may comprise an electric energy generating and storage system for the operation of the system.

Preferably, the energy generating and storage system may comprise: a) electric power low-voltage generating means for intrinsically safe operation; b) rechargeable energy storage means for storing energy; c) energy storage management means for the controlled charging of the energy storage means; d) energy management means to control the release of the stored energy in the energy storage means; and e) energy measurement means to ascertain the amount of energy available from the energy storage means. The rechargeable energy storage means may be a battery.

The control unit and/or the actuating means and/or the sensor(s) may be loT and/or wirelessly connected to and/or controlled by a cloud-based control system/program and/or by an IfTTT-rule run by an app or loT system.

In an embodiment the system may further comprise a remote storage medium for receiving and storing data and information from the system. The remote storage medium may be any one or more of: i) a server connected to the private or public wireless network; or ii) a cloud storage medium connected to the private or public wireless network. The remote storage medium may allow the user to access archived data and information from the system.

In an embodiment the actuating means and/or sensor(s) and/or control unit may be part of one device, such as one gas regulator unit.

Any one or more of the above embodiments or preferred features can be combined with any one or more of the above aspects.

### Brief description of the drawings

The invention will be described in more detail below by means of nonlimiting examples of embodiments and with reference to the schematic drawings, in which:
Figs. 1a-e illustrates a schematic example of a common gas regulator
Figs. 2a-b illustrates a schematic example of an actuator system according to the invention
Figs. 3a-c illustrates a schematic examples of embodiments of a gas regulator system according to the invention
Figs 4a-e illustrates a schematic examples of embodiments of a gas regulator system according to the invention

### Detailed description of the invention

In the following, embodiments of the invention will be described in further detail. Each specific variation of the features can be applied to other embodiments of the invention unless specifically stated otherwise. Note that for illustrative purposes the dimensions, especially thickness and/or size of the different elements shown may be exaggerated.

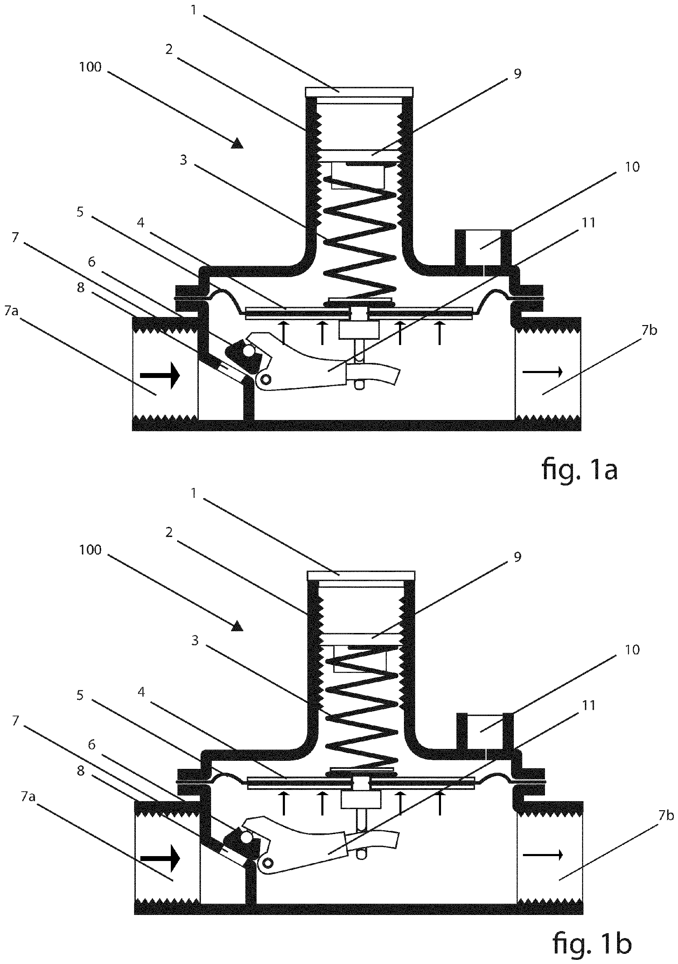

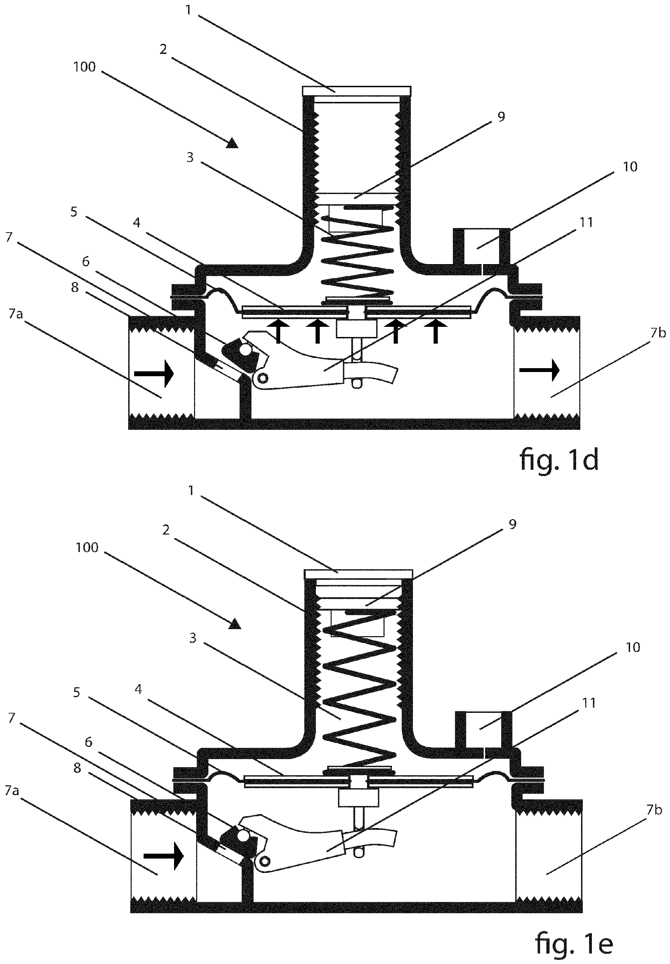

Turning first to Figs. 1a-c which shows a typical gas regulator 100 at different stages during its regulating process.

The gas regulator 100 comprises a first hollow housing part 2 and a second hollow housing part 7. Inside the gas regulator 100 the first and second parts are separated by a diaphragm 5. The diaphragm 5 is supported on both sides by diaphragm plates to prevent elastic fatigue and create stability.

The second housing part 7 comprises a gas inlet 7a for receiving gas from a gas container. The second housing part also comprises a gas outlet 7b for directing gas from the regulator 100 to a receiving device.

Near the gas inlet 7a a valve seat 8 is arranged inside the second housing part 7. The valve seat acts as a port for entry of gas from the gas inlet 7a further into the second hollow housing part 7 and on to the gas outlet 7b.

The regulator 100 further comprises a valve member 6 arranged in the second housing part 7. The valve member is connected to said diaphragm 5 via a lever 11. The valve member 6 is alternately engageable, upon movement of the valve lever 11, with the valve seat 8 to alternately close the valve seat port, so that no gas may flow from the gas inlet 7a through the regulator 100.

Thus the valve member 6 is adapted to move reciprocally between a first closed position, wherein said valve member 6 engages with the valve seat 8 so as to close the port and prevent gas flow from the gas inlet further into the second housing part 7 and further on to the gas outlet 7b, and a second open position, wherein said valve member 6 is not in direct contact with the valve seat, whereby the port is left open, so as to allow gas to flow from the gas inlet through the valve seat and further into the second housing part 7 and out through the gas outlet 7b.

An adjusting element 9 is arranged inside the first housing part 2. The adjusting element 9 is connected to a dynamic element 3 in the form of a spring 3, at one end of the spring. At the opposite end the spring 3 is connected to the diaphragm and the diaphragm plate. The spring 3 is adapted to convey potential energy to the diaphragm depending on the setting of the adjusting element inside the second housing part.

Through the diaphragm 5 the spring 3 is also connected to the valve lever 11.

A ventilation unit 10 is arranged in the first housing part 2. The ventilation unit 10 allows the gas regulator to breathe during normal operation and functions as a pressure relief opening in an over-pressure situation.

The position and thus potential energy of the spring is usually pre-set by the producers of the gas regulator by positioning the adjusting element 9 inside the first housing part. Depending on the desired spring force it is possible to move adjusting element axially to a different pre-setting, to either create a stronger or weaker spring force on the diaphragm.

In Fig. 1a gas from a gas container (not shown) connected to the gas inlet 7a flows into the gas inlet and through the valve seat, since the force exerted by the spring on the diaphragm is higher than the pressure of the gas inside the second housing part, said gas exerting a pressure force back on the diaphragm (opposite the force of the spring), so the valve member is positioned in the second open position. The gas may then flow into the second housing part 7 and out through the gas outlet 7b and onto a receiving device (not shown).

When the pressure from the gas within the second housing part 7 exerted on the diaphragm is higher than the pressure exerted by the spring, the diaphragm is moved towards the first housing part (i.e. towards the adjusting element 9), whereby this movement of the diaphragm also moves the valve lever 11 and thus the valve member 6 to engage with the opening of the valve seat 8, which is thus closed, so that no gas may flow therethrough, as seen on Fig. 1b.

When the valve seat is closed, the pressure inside the second housing part 7 that is exerted on the diaphragm will drop, thereby the pressure exerted by the spring on the diaphragm will be greater than said opposite pressure. Hereby the diaphragm will be moved away from the adjusting element 9, resulting in the simultaneous movement of the valve lever and the valve member to the second open position again. This enables gas to flow once again from the gas inlet 7a into and through the second housing part 7 of the regulator 100 and out through the gas outlet 7b.

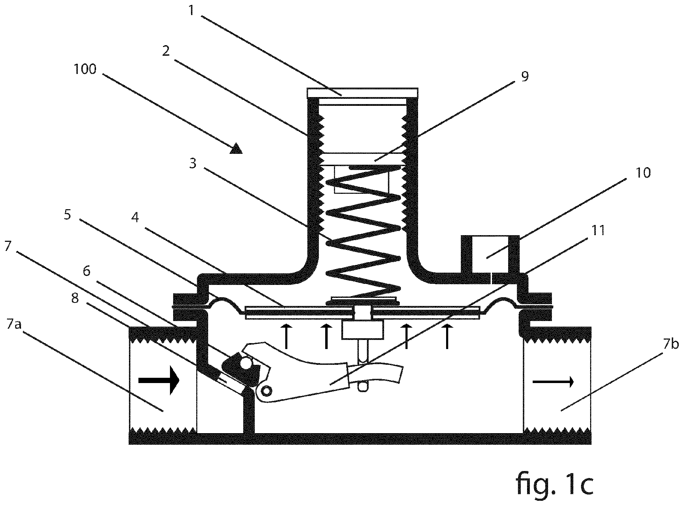

This shift in valve position may happen a plurality of times until the gas flow finds a suitable pressure, e.g., where the valve is slightly open as seen on Fig. 1c.

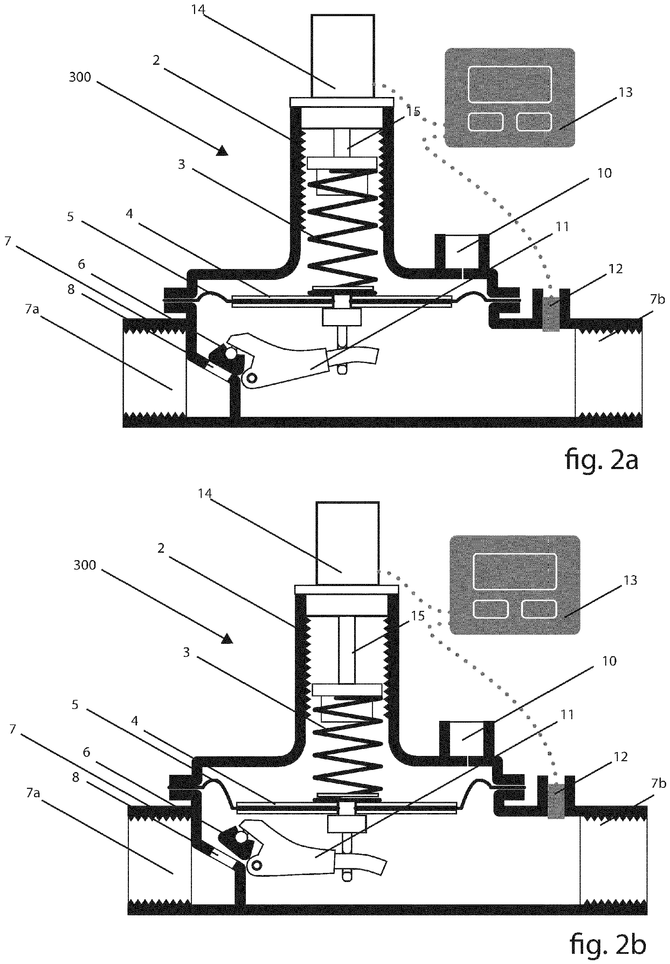

Turning to Figs. 2a-b which shows an embodiment of an actuator system 300 for adjusting gas flow through a gas regulator. The gas regulator may be according to the embodiments shown in Figs. 1a-c. and described above.

In this embodiment the actuator system 300 comprises an actuating means 14 arranged in connection with the gas regulator 200.

The actuating means 14 are arranged at the first housing part 2. More specifically it is arranged where there is a lid 1 present on the common gas regulators 100 as seen on fig. 1a-e.

Hereby it is possible to retrofit the actuating means 14, and thus the actuator system 300 according to the invention on a common gas regulator 100.

The actuating means 14 comprises and is connected to one end of a moving part 15. The moving part is preferably a piston 15. The piston is arranged inside the first housing part 2.

The opposite end of the piston 15 is connected to the adjusting element 9, which is arranged inside the first housing part 2.

Unlike the common gas regulators, where the adjusting element are positioned at a pre-defined setting by engaging with the first housing part, preferably inside walls of the housing, the adjusting element 9 according to the invention is adapted to be moved axially by the actuating means 14 via the piston 15.

The adjusting element 9 is connected to one end of a dynamic element 3. In this embodiment the dynamic element is a spring 3. At the opposite end of the spring 3 it is connected to the diaphragm 5 and/or the diaphragm plate 4.

The spring 3 is adapted to convey potential energy to the diaphragm depending on the position of the piston and adjusting element, which position is managed by the actuating means 14.

Through the diaphragm 5 the spring 3 is also engaged with the valve lever 11 and therethrough the valve member 11.

The actuating means 14 are adapted to be able to change the flow of gas through said gas regulator. When the piston is moved towards the diaphragm the spring is compressed and thus exerts a restoring force at both ends, one end towards the diaphragm and the other end back towards the piston and the adjusting element. When the force of the gas inside the second housing part is greater than the force of the spring, the gas pressure force will push the diaphragm back up towards the piston and adjusting element, whereby the valve lever and valve member will move accordingly with the diaphragm, and the valve member will engage with the valve seat so as to close the valve seat for inflow of gas.

When the flow of gas stops, or is minimized, the pressure inside the second valve housing will drop, allowing for the spring force to be greater than the force of the gas pressure inside the second housing part, thus allowing for the diaphragm to move away from the piston and adjusting element, accordingly the valve lever and valve member moves, so that the valve member is disconnect from and/or moved a distance from the valve seat, so that gas may again flow through the valve seat.

The actuator system 300 further comprises a sensor, specifically a pressure sensor arranged in connection with the second housing part 7, for sensing a property, specifically a gas pressure, in the second housing part 7, and based on this sensed property create a sensor signal.

The actuator system 300 further comprises a control unit 13, preferably adapted for wireless communication. The control unit 13 receives said sensor signal from the pressure sensor 12 and based on said sensor signal sends an instruction signal to the actuating means 14 for changing the position of the piston 15, and thus change the flow of gas through said gas regulator.

Hereby the system is capable of dynamically changing the setting of the threshold level within the regulator that determines the flow of gas through said regulator. Hereby the sensed properties provide a real-time signal for the control unit, which may then instruct the actuating means accordingly providing optimized gas flow through/from the regulator to the receiving device.

Fig. 2a shows the valve member 6 in the first closed position, where the valve member 6 and valve seat 8 are engaged, so that the port of the valve seat is closed, and no gas may flow through the gas inlet 7a and through the valve seat.

The actuating means 14 may be any device/motor capable of receiving the instruction signal and changing the position of the piston 15 based on said signal so as to ultimately change the valve member as a result of the movement of the piston.

In an embodiment the actuating means is a motor. In another embodiment the actuating means is an actuator and/or a motor such as an on-off, incremental positioning, magnet, step-motor, or the like.

Fig. 2b shows the valve member 6 in the second open position, where the valve member 6 and valve seat 8 are disconnected, so that the port of the valve seat is open, and gas may flow through the gas inlet 7a and through the valve seat into the second housing part 7 and out through the gas outlet 7b.

In Fig. 2a the moving part, specifically a piston 15 is further way from the diaphragm 5 than what is shown in Fig. 2b to regulate the valve member position.

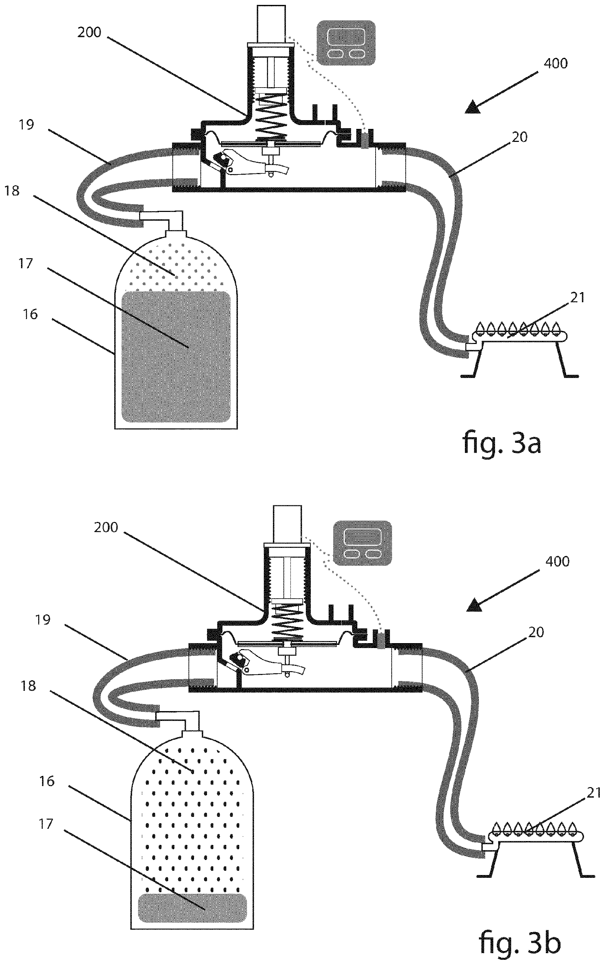

Turning to Fig. 3a-c which shows different embodiments of a gas regulator system 300. The system 300 comprises a gas regulator control system 400 according to any one of the above embodiments.

A first tube 19 is at one end connected to the gas inlet 7a and at the opposite end connected to a gas container 16. The gas container initially contains liquified gas 17 and vaporized gas 18. The gas is directed through the first tube and in through the gas regulator via the gas inlet and valve seat.

A second tube 20 is at one end connected to the gas outlet 7b and at an opposite end to a receiving device. When gas is directed through the regulator 200 it exits said regulator through the second tube 20 and is directed further into the receiving device 21, here shown as a gas burner.

Turning to Fig. 3b where it is shown that the pressure within the gas container 16 is dropping, since the gas container is running empty.

This drop in pressure is sensed by the pressure sensor and transmitted to the control unit, which then in turn instructs the actuating means 14 to push the piston further down towards the diaphragm, thereby increasing the force of the spring on said diaphragm. Now a higher pressure inside the second housing part is needed to close the valve member, thereby allowing more flow even at low pressure points.

Hereby the dynamically adjusted spring force compensates for the falling inlet pressure and helps to overcome the pressure drop in the first tube. It is thus possible to provide a stable pressure from the regulator to the receiving device.

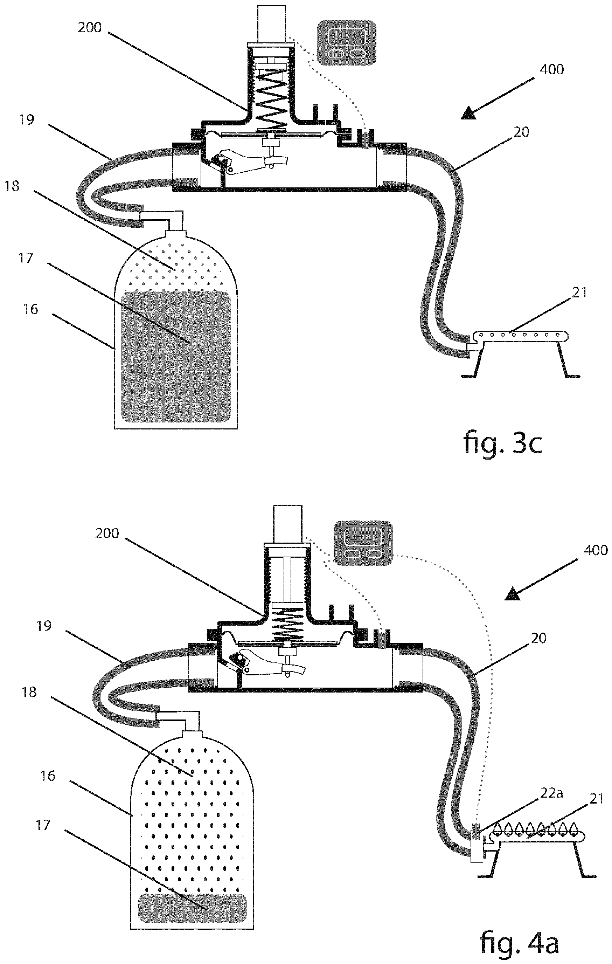

Turning now to Fig. 3c where the valve member is engaged with the valve seat so as to close the port of the valve seat, so that no gas can run through the regulator.

The piston is moved away from the diaphragm hereby loosening the dynamic element, i.e. the spring. When the piston is moved approximately as far away from the diaphragm as is possible within the first housing part, the spring may experience very little spring force. Hence the valve member will be engaged with the valve seat.

In this way it is possible to close the flow of gas through the regulator by adjusting the force of the spring. This is especially advantageous in situations where it is necessary to close the gas flow.

The embodiment shown in fig. 4a the sensor is a pressure sensor 22a. The sensor is arranged adjacent to the receiving device 21 for detecting gas flow from the regulator to the receiving device 21.

The pressure sensor 22a may alternatively be a flow sensor.

Hereby it is possible for the control unit 13 to receive information regarding the specific gas pressure or flow that actually reaches the receiving device 21.

The sensor 22 a may be positioned between the second tube 20 and the receiving device 21. The sensor may also be arranged in/on the second tube, so as to detect the pressure/flow within the tube 20.

In an embodiment the system comprises two sensors. In this specific embodiment a first sensor is the pressure sensor 12 arranged as part of the second housing part of the regulator and the other second sensor is a pressure sensor 22a arranged at the receiving device 21.

The control unit 13 thus receives sensor signals from both sensors and sends instructions to the actuating means 14 for changing the position of the adjusting element 9, so that the position of the valve member 6 is changed.

By having more than one sensor it is possibly to provide better analysis of the actual floe/pressure through and from the regulator, and thus adjust the setting of the valve member accordingly.

With this specific set-up the system is also able to detect a potential leak in the second tube 20 on the background of the difference in sensor signals received by the control unit form the two sensors.

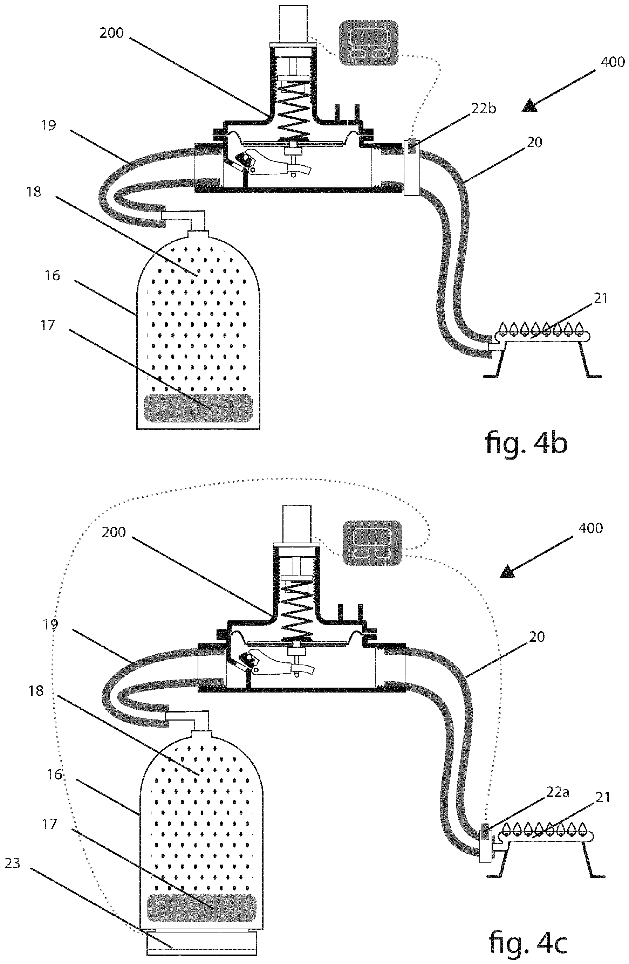

As shown in fig. 4b the system may comprise just one sensor, preferably a pressure sensor 22b, arranged at the gas outlet of the regulator 200.

The sensor 22b a may be positioned between the second tube 20 and the gas outlet 7b of the regulator 200. The sensor may also be arranged in/on the second tube, so as to detect the pressure/flow within the tube 20.

Turning to the embodiment in fig. 4c, the system comprises two sensors 23, 22a. In this specific embodiment the first sensor 22a is arranged near the receiving device 21. This sensor may be a pressure sensor or a flow sensor. The second sensor 23 is arranged adjacent to the gas container 16, more specifically under said container. The second sensor 23 is a weighing scale adapted to measure a weight of the content of the gas container 16, preferably the weight of the liquified gas 17.

The addition of the additional sensor, in this case the weighing scale, makes it possible to detect whether a drop in pressure is due to the gas container running low or a leakage in the system, hereby providing an extra security to the system.

In one embodiment the control unit 13 is adapted to transmit an alert signal to a remote device, such as a computer, phone, or tablet, if a drop in pressure is registered. This drop in pressure may be caused by the gas container running low, so that the user can change the gas container to a new full one. The drop may also be caused by a leakage, whereby the user can take precautionary measures to avoid any dangerous situations.

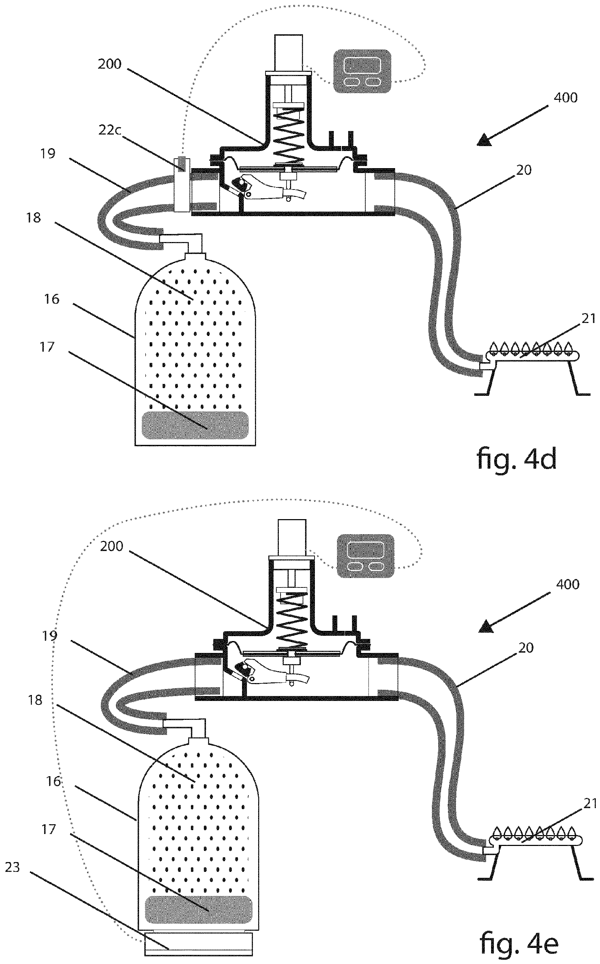

Turning to fig. 4d which shows an embodiment with one sensor 22c. The sensor is a pressure sensor 22c. The sensor is arranged at the gas inlet 7a of the regulator 200.

The sensor 22c may be arranged between the gas inlet 7a and the first tube 19. The sensor 22c may also be arranged in/on the first tube 19, so as to detect the pressure/flow within the tube 19.

Hereby it is possible to detect the exact pressure/flow of the gas from the gas container 16 and calculate and/or estimate the position of the valve member in order to achieve the desired outlet pressure/flow from the gas outlet 7b of the regulator.

The embodiment shown in fig. 4e comprises one sensor 23. The sensor is a weighing scale 23. The weighing scale 23 is arranged under the gas container 16. The weighing scale 23 is adapted to measure a weight of the content of the gas container 16, preferably the weight of the liquified gas 17.

In an embodiment of the present invention the system further comprises a temperature sensor. The temperature sensor may detect a sensed property such as a temperature of the gas container and/or the ambient temperature.

Since vaporization of the liquified gas is dependent on ambient temperature, gas container type and usage, the possibility to detect another property by the system will provide for at better control of the regulator.

The control unit may receive data from other external sources, such as ambient temperature, weather forecasts and daily pricings on gas.

By knowing both the residual amount of content in the gas container 16 in combination with the temperature, it is possible to estimate the optimal position of the valve member, and also change this dynamically as the sensed properties changes, to ensure that the optimal gas output to the receiving device 21 is created.

In an embodiment the system further comprises a magnetic field sensor (such as a Hall effect sensor) and/or an optical sensor.

If for some reason the connection to any of the wireless communicating parts of the system are cut off or unable to be established, the actuator may be adapted to go to an automatic mode, wherein the valve member is moved to the second position, so as to close any flow through the regulator as a safety precaution.

By way of example, it will be readily appreciated that the system may comprise a combination of two or more of the sensors, such as weight sensors, temperature sensors, pressure sensors and flow rate sensors, or any combination thereof.

While specific language has been used to describe the present subject matter, any limitations arising on account thereto, are not intended. As would be apparent to a person in the art, various working modifications may be made to the method in order to implement the inventive concept taught herein. The drawings and the foregoing description gives examples of embodiments. Those skilled in the art will appreciate that one or more of the described elements may well be combined into a single functional element. Alternatively, certain elements may be split into multiple functional elements, Elements from one embodiment may be added to another embodiment.

**List of reference numbers**

| | |
|---|---|
| 100 | Common gas regulator |
| 200 | Gas regulator |
| 300 | Actuator system |
| 400 | Gas regulator system |
| | |
| 1 | Lid |
| 2 | First housing part |
| 3 | Dynamic element, preferably a spring |
| 4 | Diaphragm plate |
| 5 | Diaphragm |
| 6 | Valve member |
| 7 | Second housing part |
| 7a | Gas inlet |
| 7b | Gas outlet |
| 8 | Valve seat |
| 9 | Adjusting element |
| 10 | Ventilation |
| 11 | Valve lever |
| 12 | Sensor |
| 13 | Control unit |
| 14 | Actuating means |
| 15 | Moving part, preferably a piston |
| 16 | Gas container |
| 17 | Liquified gas |
| 18 | Vaporized gas |
| 19 | First tube |
| 20 | Second tube |
| 21 | Receiving device, such as a gas appliance |
| 22a | Sensor |
| 22b | Sensor |
| 22c | Sensor |
| 23 | Weighing scale |

## Claims

1. An actuator system 300 for adjusting gas flow through a gas regulator 200, said actuator system 300 comprising;
- an actuating means 14 with a moving part 15 adapted to be arranged in connection with the gas regulator 200,
- at least one sensor 22 for sensing a property, such as gas pressure or gas flow, and based on said property generate a sensor signal, and
- a control unit 13 adapted to receive said sensor signal from the sensor and based on said sensor signal send an instruction signal to the actuating means 14 for changing a position of said moving part.

2. An actuator system 300 according to claim 1, wherein the moving part 15 is adapted to be arranged inside the gas regulator 200.

3. An actuator system 300 according to any one of the preceding claims wherein the actuating means 14 and/or the control unit 13 and/or the sensor 22 is adapted for wireless communication.

4. An actuator system 300 according to any of the preceding claims wherein the actuating means via the moving part 15 is engaged with a valve member of the actuator in order to move said valve member between a first position, wherein said valve member engages with a valve seat 8 so as to close a gas flow through the regulator, and a second position, wherein said valve member 6 is detached from the valve seat 8, so as to allow gas to flow through the regulator, based on the instruction signal.

5. An actuator system 300 according to any of the preceding claims wherein the control unit 13 comprises a programmable computing part for calculating a setting of the actuating means 14 from the sensor signal and/or transmitting this to said actuating means 14 as the instruction signal.

6. An actuator system 300 according to any of the preceding claims comprising at least two sensors 22a-c.

7. An actuator system 300 according to any of the preceding claims wherein the sensor is a pressure sensor and/or the sensor is a flow sensor.

8. An actuator system 300 according to any of the preceding claims wherein the sensor is a weighing scale 23, preferably arranged in connection with a gas container 16 so as to detect a weight of the content present in said container, preferably the content is liquified gas 17 and vaporized gas 18.

9. A gas regulator system 400 comprising
an actuator system 300 according to any of the preceding claim, and
a gas regulator 200 having
- a first housing part 2, a second housing part 7, and a diaphragm 5 separating said parts 2, 7, said second housing part 7 having a gas inlet 7a for receiving gas from a gas container 16, a gas outlet 7b for directing gas from the regulator 200 to a receiving device 21, and a valve seat 8,
- an adjusting element 9 arranged in the first housing part 2 and connected to said diaphragm 5 via a dynamic element 3, preferably a spring,
- a valve member 6 arranged in the second housing part 7 and connected to said diaphragm 5 via a lever 11, the valve member being adapted to move reciprocally between a first position, wherein said valve member engages with the valve seat 8 so as to close a flow from said gas inlet, and a second position, wherein said valve member 6 is detached from the valve seat, so as to allow gas to flow from the gas inlet into the second housing part 7 and out through the gas outlet.

10. A gas regulator system 400 according to claim 9 wherein the sensor 12, preferably a pressure sensor, is arranged in connection with the second housing part 7, said sensor 12 being suitable for detecting a pressure inside the second housing part 7.

11. A gas regulator system 400 according to any one of claims 9 to 10 wherein the sensor 22a is a pressure sensor and/or a flow sensor, said sensor being arranged in connection with the receiving device 21 for detecting gas pressure and/or gas flow from the regulator 200 to the receiving device 21.

12. A gas regulator system 400 according to any one of claims 9 to 11 wherein the sensor 22b is a pressure sensor and/or a flow sensor, said sensor being arranged in connection with the gas outlet 7b of the regulator 200 for detecting gas pressure and/or gas flow from the regulator to the receiving device 21.

13. A gas regulator system 400 according to any one of claims 9 to 12 wherein the sensor 22c is a pressure sensor and/or a flow sensor, said sensor being arranged in connection to the gas inlet 7a of the regulator 200 for detecting gas pressure and/or gas flow from the gas container 16 to the regulator 200.

14. A gas regulator system 400 according to any one of claims 9 to 13 wherein the sensor is a weighing scale 23 arranged in connection with the gas container 16 so as to detect a weight, preferably a weight of liquified gas 17 present in the container 16.

15. A method for dynamically controlling a flow of gas in a gas regulator comprising the steps of;
- providing an actuator system 300 according to any one of claim 1 to 8,
- sensing a property, such as gas pressure or gas flow or weight, with the sensor 12,
- generate a sensor signal based on said property,
- transmitting said sensor signal from the sensor 12 to the control unit 13,
- creating an instruction signal based on the sensor signal,
- transmitting the instruction signal from the control unit 13 to the actuating means 14, so as to change the flow of gas through said regulator 200 based on the sensed property.

16. A method according to claim 15 wherein the steps of the method are performed dynamically so as to maintain the pressure of the gas flow out of the regulator within a pre-determined interval, preferably between approximately 20 - 40 mbar, more preferred between approximately 25 - 35 mbar.
